(19) **Europäisches Patentamt / European Patent Office / Office européen des brevets**

(11) **EP 4 624 991 A1**

(12) **EUROPEAN PATENT APPLICATION**

(43) Date of publication:
**01.10.2025 Bulletin 2025/40**

(21) Application number: **24166882.1**

(22) Date of filing: **27.03.2024**

(51) International Patent Classification (IPC):
**G01S 13/42** (2006.01)      **G01S 13/58** (2006.01)
**G01S 13/72** (2006.01)      **G01S 13/931** (2020.01)

(52) Cooperative Patent Classification (CPC):
**G01S 13/931; G01S 13/42; G01S 13/584;
G01S 13/726**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
- **VOLKSWAGEN AG
  38440 Wolfsburg (DE)**
- **Fraunhofer-Gesellschaft zur Förderung
  der angewandten Forschung e.V.
  80686 München (DE)**

(72) Inventors:
- **Gisder, Dr. Thomas
  38446 Wolfsburg (DE)**
- **Kurz, Dr. Heiko Gustav
  30177 Hannover (DE)**
- **Meinecke, Dr. Marc-Michael
  38524 Sassenburg (DE)**
- **Simoni, Dr. Renato
  53111 Bonn (DE)**
- **González-Huici, Dr. María Antonia
  53123 Bonn (DE)**
- **Mateos-Nunez, Dr. David
  38806 Alcala de Henares (ES)**

(54) **A METHOD FOR DETERMINING A TARGET INFORMATION OF A RADAR TARGET BASED ON AN COHERENT SIGNAL PROCESSING CHAIN, RADAR SYSTEM AND MOTOR VEHICLE**

(57)     The present invention relates to a method for determining a target information (67) of a target (15) of a radar system (3), wherein the system (3) comprising transmitting antennas (9) and receiving antennas (10), wherein

- each transmitting antenna transmits a radar signal (13) in successive transmission operation,
- after each transmitting operation, antennas (10) receive signals (16) based on the transmitted signal (13) of the respective transmitting operation,

- multiple hypothesis of target angles with regards to the radar target (15) are specified,
- for each hypothesis of a target angle a data structure is generated based on the received signals (16),
- for each data structure a range-Doppler-map (48, 49, 50) is generated based on the signals (16), and
- the target information (67) is determined based on the range-Doppler-maps (48, 49, 50). Furthermore the present invention relates to a radar system (3) and a motor vehicle (21).

Fig. 18

**Description**

The present invention relates to a method for A method for determining at least one target information of at least one radar target of a radar system, wherein the radar system comprising at least one antenna array, which comprising multiple transmitting antennas and multiple receiving antennas.

The present invention further relates to a radar system and to a motor vehicle.

The document US 2020/0 049 810 A1 describe a vehicle, radar system for a vehicle, and method of determining a radial velocity of an object via the radar system. The radar system includes a transmitter, receiver and processor. The transmitter transmits a source signal towards an object, and the receiver for receives a reflection of the source signal from the object. The processor obtains a Doppler measurement related to a radial velocity of the object, wherein the Doppler measurement includes a Doppler ambiguity, obtains a range walk rate for the radial velocity of the object, and resolves the Doppler ambiguity of the Doppler measurement using the range walk rate to obtain the radial velocity of the object.

The document US 2014/0 111 372 A1 describe a system and method for an arrayed sensor to resolve ambiguity in received signals, improve direction of arrival accuracy and estimate a location of one or more targets in an environment including signal interference.

The document US 2022/0 099 817 A1 describe a vehicle radar system utilizes multiple radar sensors having overlapping fields of view to effectively synthesize a distributed radar antenna array aperture from the outputs of the multiple radar sensors and effectively enhance one or more of angular resolution, detection range and signal to noise ratio beyond that supported by any of the radar sensors individually.

It is an object of the present invention to improve a process for determining target information of radar targets.

This object is solved by the respective subject matter of the independent claims. Advantageous developments and preferred embodiments are the subject matter of the dependent claims.

According to an (first) aspect of the invention, a method for determining at least one target information of at least one radar target of a radar system is provided, wherein the radar system comprising at least one antenna array, which comprising multiple transmitting antennas and multiple receiving antennas, wherein each transmitting antenna of the multiple transmitting antennas transmits a radar signal into an environment of the radar system in successive transmission operation. After each transmitting operation, at least some of the plurality of receiving antennas receive reflected received signals from the radar target in the environment based on the transmitted radar signal of the respective transmitting operation, wherein multiple hypothesis of target angles with regards to the radar target are specified, and for each hypothesis of a target angle a data structure is generated based on the received signals, wherein each data structure comprised the received signals which correspond to the hypothesis of the target of the respective data structure. For each generated data structure an individual range-Doppler-map is generated based on the individual received signals of each data structure, and the target information of the radar target is determined based on the range-Doppler-maps of the date structures.

The proposed method has the advantage that a process for determining target information of radar targets of a radar system or other sensor systems may be improve. Another advantage of the proposed method is, that signal-to-noise-ration (SNR) in the range-Doppler-maps or range-Doppler-matrices may increase. Through this the signal-to-noise-ration of the radar system further increase. The determining of target information of radar target may be improve.

SNR is an important parameter that affects the performance and quality of systems that process or transmit signals, such as communication systems, audio systems, radar systems, imaging systems, and data acquisition systems. A high SNR means that the signal is clear and easy to detect or interpret, while a low SNR means that the signal is corrupted or obscured by noise and may be difficult to distinguish or recover. SNR may be improved by various methods, such as increasing the signal strength, reducing the noise level, filtering out unwanted noise, or using error correction techniques.

Due to the sparse, non-uniform and large geometry of the antenna array, conventional signal processing algorithms fail to compensate phase shifts and do not result in an unambiguous angular measurement. Therefore the proposed method may be used to solve these problems.

The proposed method has further the advantage that the signal processing time and/or the signal processing procedure of determining target information of at least one radar target of a radar system increase.

In particular, the signal processing may be done coherent. This is advantageously for distributed antennas of a radar system.

The proposed method may be advantageously used to improve the environmental detection of vehicles. When using a radar system in the automotive sector, for example, accurate, improved and yet simpler detection of objects is required. Here, increased detection performance and reduced side lobe ambiguity in conjunction with a high angular resolution of the radar system is important, for example, for lane guidance, for carrying out an overtaking maneuver or for obstacle detection. This is where the present invention advantageously comes into play and may provide a remedy in this respect.

Also the proposed method may be used to modified a radar system in this way, that for the radar system a high angular resolution like at lidar system is available. Another advantage of the proposed method is to reduce the number of transmitting antennas and receiving antennas of the radar system.

According to the proposed method an coherent processing of data of distributed apertures, radar networks, monostatic antennas, bistatic antennas, non-uniform antennas, sparse antennas, non-equidistant antenna spacing and with curved spatial dimension in 2D or 3D, especially in dynamic applications, such as automobiles, trains, airplanes and ships is possible.

Especially, the proposed method solve the problem of large antenna arrays exhibit due to the geometrical antenna placement a paralaxis effect which results in ambiguous range with respect to the path sending antenna - target - receiving antenna.

Due to the sparse, non-uniform and large geometry of the antenna array, conventional signal processing algorithms fail to compensate phase shifts and do not result in an unambiguous angular measurement. Therefore the proposed method may be used to solve this problem.

According to the proposed method a coherent signal processing chain for distributed radar antenna may be provided.

The radar system may comprising one antenna array or several antenna arrays. The transmitting antennas may be understood such as transmitter to send out radar signals in the environment. The receiving antennas may be understood such as receiver to receive signals, which are reflected on an object, especially a target, in the environment.

In particular, the multiple transmitting antennas and the multiple receiving antennas may be distributed arranged on the antenna array.

An antenna array, which may also be referred to as an aperture or antenna aperture or array aperture, may be a surface or a predefined area on which or within which several or a large number of individual antennas or antenna elements are arranged. In particular, an antenna array may be used to both transmit and receive signals.

At least one transmit signal or several transmit signals may be emitted in the environment of the radar system. If at least one of these transmitted signals, such as the at least one transmitted signal, hits a radar target, such as an object in the vicinity, this signal is reflected accordingly and reflected back in the direction of the radar system. Therefor every transmitting antenna of the several transmitting antenna transmit an individual radar signal in successive transmission operation. In other words, in each transmission operation only one transmitting antenna is sending out a radar signal. After each transmission operation or transmission round the receiving antennas received the reflected received signals.

In other words, a variation of transmitting antennas in successive MIMO cycles is applied. In each MIMO cycle one transmitting antenna is transmit a radar signal.

The data structures may be generated by an electronic evaluation unit of the radar system. On Basis of the received signals the data structures, especially data packages, are generated by the evaluation unit. The evaluation unit is further designed to perform different signal processing process of the radar system.

In particular, all received signals of all transmission operations are sorted by the respected transmitting antenna. In other words, all received signals, which are based on the same transmitting antenna, may be selected to the data structure of the respected transmitting antenna.

With the evaluation unit may estimate the range-Doppler- map or a range-Doppler-spectrum or a range-Doppler-matrix for each data structure.

For example, a large number of different hypothesis of target angles with regards to the radar target are specified or are estimated.

The data structure may be designated as hypothesis data structures or hypothesis databases.

In particular, for each hypothesis of a possible target angle an individual data structure is generated based on the received signals, wherein each data structure comprised the received signals which correspond to the hypothesis of the target of the respective data structure. Furthermore for each generated data structure an individual range-Doppler-map is generated based on the individual received signals of each data structure. Especially a range-Doppler-map shows how far away the targets are and how quickly they are approaching or receding.

After this, the target information of the radar target is determined based on the range-Doppler-maps of the date structures.

In one embodiment, for each transmission operation the one of the plurality of the transmitting antennas which, in particular only, transmits a radar signal is defined in any order, in particular the one of the plurality of the transmitting antennas which, in particular only, transmits a radar signal in each transmission operation is randomized default. Through this, the determining of the target information of the radar target may be carried out more efficient and/or faster. In other words, the transmitting antenna of each transmission operation which only transmit a radar signal may be defined random.

A target range and/or a target speed of the radar target may be estimate based on the target detection.

In another embodiment multiple pseudo targets are determined based of a respective field of view of each transmitting antenna. Each transmitting antenna contains an individual field of view, in which possible radar targets may be detected. According to the field of view of a respective transmitting antenna suitable for this hypothesis of target angels may be specified or estimated. With respect to the pseudo targets the data structures may be generated easier.

The pseudo targets may be possible targets, which possible may be detected with a transmitting antenna. In other words, the pseudo targets are not real targets but instead theoretical targets.

In another embodiment for each pseudo target a range bin is determined based on the radar signal of the respective transmitting antenna and on a received signal which correspond to the radar signal. A transmitting antenna send at least one radar signal and at least one to this correspond received signal may be received. According to the pseudo targets based of the field of view of the transmitting antenna for each of these pseudo targets a range bin may be estimated. In other words, for each pseudo target a two way path distance may be estimated.

In another embodiment hypothesis of the directions of arrival of the radar target are determined on the basis of the range bin of the pseudo targets, wherein the multiple hypothesis of target angels are specified based on the hypothesis of the directions of arrival.

According to the possible pseudo target the real radar target may be analyses. Therefore one or more hypothesis of the direction on arrival may be considered. Based on this the target information may be estimated. Therefore the hypothesis of target angels may be considered.

In another embodiment a construction of an aperture hypothesis for each pseudo target is applied based on the respective pseudo target. Especially the pseudo targets may be expanded in their information content. This is helpful at the determining of the hypothesis of the directions of arrival of the radar target.

In another embodiment, a target detection of the radar target is applied based on a range-Doppler-map of each data structure. Through this, on basis of each range-Doppler-map the the presence of the radar target or other object in the environment may be check. It may be try based on each data structure to detect the radar target. Therefore, more information of the radar target may be generated and the determining of the target information of the radar target may be more efficient.

A target range and/or a target speed of the radar target may be estimate based on the target detection.

In another embodiment, the received signals of each data structure are coherent combined for determining the range-Doppler-map of each data structure. Therefore the less antennas of an antenna array are needed and the processing time may be increased faster. By combining the received signals coherent, the individual antennas of the antenna array may be arranged in any order.

In another embodiment, for each range-Doppler-map of the data structures an individual target signal relating to the radar target is generated based on each range-Doppler-map. In other words, a local aperture signal, also called "snapshot", is indexed by each range-Doppler-map, also called range-Doppler-cell. The target signals may be used for angel estimation of the radar target.

In another embodiment, for each range-Doppler-map a Doppler compensation is applied based on a Doppler compensation filter which is based on the individual target signal. Based on the Doppler compensation filter each target signal may be compensated. The Doppler compensation filter may be generated for each data structure individuality.

In another embodiment, he target information of the radar target is determined based on an orthogonal matching pursuit algorithm or a compressive sensing algorithm. Thus, with the help of the range-Doppler-maps, an approximation algorithm, in particular a sparse approximation algorithm, may be used to determine the corresponding target information or several target information. Therefore, an accurate angle target information may be estimate.

In particular the compensated target signals or compensated local aperture signals may be used as input for the orthogonal matching pursuit algorithm or a compressive sensing algorithm.

In another embodiment, with the target information an angle and/or a direction to the radar target is provided. In other words, the target information may be used in particular to estimate an angle in order to be able to determine a corresponding angle with respect to the radar target relative to the radar system and/or a direction of the radar target. This is particularly relevant for detecting the surroundings of a vehicle.

According to an (second) aspect of the invention, a Radar system is provided. The radar system comprising at least one antenna array, which comprised multiple transmitting antennas and multiple receiving antennas, and an electronic evaluation unit, wherein the radar system is designed to carry out a method according to the preceding (first) aspect or to one of the embodiments. In particular, the method described above may be carried out with the radar system just mentioned.

The radar system is, in particular, an electronic radar device or radar device with which radar targets in an environment may be detected or recorded. In particular, the radar system may have several antenna arrays, which in turn may be referred to as an antenna array. Thus, the radar system may have a plurality of antenna arrays arranged in a distributed manner, which in turn may each have several transmitting elements and receiving elements. In this way, the proposed radar system may be used to detect a surrounding area, in particular 360 degrees.

The electronic evaluation unit may be an electronic computing system. In particular, the electronic evaluation unit may be designed as a distributed system, whereby at least part of the evaluation unit may be arranged in a respective antenna array in order to carry out corresponding pre-processing. The electronic evaluation unit may also be designed as a central system, which is linked or coupled to the respective antenna arrays in terms of communication or data technology in order to be able to carry out a corresponding evaluation of the target information.

According to an (third) aspect of the invention, a Motor vehicle which comprising a radar system according to the (second) aspect is provided.

In particular, the aforementioned radar system may be integrated or installed in the aforementioned vehicle. This means that the aforementioned radar system may be used to detect the vehicle's surroundings. This may be used in particular advantageously for driver assistance systems or autonomous systems of the vehicle.

In one embodiment of the (third) aspect, the transmitted antennas and the receiving antennas of the antenna array are arranged at a distance from each other on the motor vehicle.

In particular, the antennas of the antenna array of the radar system are arranged at a distance from one another, so that a large area may be covered accordingly with the aid of fewer antenna array. With the method according to the previous aspect of the invention, radar information may in turn be effectively determined even if the antenna array of the radar system have uneven, difficult and/or non-equidistant antenna spacings from one another. This is particularly advantageous for the use of the radar system in the automotive sector, since antenna arrays may thus be arranged in a wide variety of areas or positions in and/or on the motor vehicle in order to be able to perform, in particular, 360-degree detection of the area surrounding the motor vehicle.

According to an independent aspect of the invention, a method for determining at least one target information of at least one radar target of a radar system is provided, wherein the radar system comprising at least one antenna array, which comprising multiple transmitting antennas and multiple receiving antennas is provided. Here may be done an incoherent singal processing according to the following. Each transmitting antenna of the multiple transmitting antennas transmits a radar signal into an environment of the radar system in successive transmission operation. After each transmitting operation, at least some of the plurality of receiving antennas receive reflected received signals from the radar target in the environment based on the transmitted radar signal of the respective transmitting operation The received signals are sorted on the basis of the transmitting antennas on which the individual received signals are based, and for each transmitting antenna a data structure is generated based on the sorted received signals, wherein each data structure comprised the received signals which based on the transmitting antenna on which the individual data structure is generated, wherein for each generated data structure an individual range-Doppler-map is generated based on the individual received signals of each data structure. The range-Doppler-maps of the date structures are averaged, and the target information of the radar target is determined based of the averaged range-Doppler-map of the date structures.

Advantageous embodiments of one aspect may be regarded as advantageous embodiments of the other aspects or of all aspects. This also applies vice versa.

In particular, the radar system and/or the motor vehicle has (technical) means for carrying out or being able to carry out the method.

The invention also includes further embodiments of the radar system and of the motor vehicle according to the invention, which have features as already described in connection with the further embodiments of the method according to the invention. For this reason, the corresponding further embodiments of the radar system and of the motor vehicle according to the invention are not described again here.

The invention also comprises the combinations of the features of the embodiments described.

The invention also comprises the combinations of the features of the different embodiments.

In the following an exemplary implementation of the invention is described. The figures show:

Fig. 1   shows a schematic view of a reception signal of a conventional radar system of the state of the art;
Fig. 2   shows a schematic transmitter-receiver structure of a radar system;
Fig. 3   shows exemplary how to calculate a range Doppler of constantly moving target;
Fig. 4   shows an exemplary receiving data structure;
Fig. 5   shows a schematic motor vehicle, which comprise the radar system of Fig.2;
Fig. 6   shows an example of a signal transmission based on a Multiple-Input-Multiple- Output-(MIMO)-method;
Fig. 7   shows exemplary a phase propagation along the chirp sequences for receiving antennas;
Fig. 8   shows for example a field of view of one of the transmitting antennas, wherein a pseudo target is considered;
Fig. 9   shows according to Fig. 8 exemplary a data structure as a possible result;
Fig. 10   shows for example according to Fig. 8 the field of view, but here is another pseudo target considered;
Fig. 11   shows according to Fig. 10 other exemplary data structures;
Fig. 12   shows for example according to Fig. 8 the field of view, but here is another pseudo target considered;
Fig. 13   shows according to Fig. 12 other exemplary data structures;
Fig. 14   shows for example according to Fig. 8 the field of view, but here is another pseudo target considered;
Fig. 15   shows according to Fig. 14 other exemplary data structures;
Fig. 16   shows for example according to Fig. 8 the field of view, but here is another pseudo target considered;
Fig. 17   shows according to Fig. 16 other exemplary data structures;
Fig. 18   shows exemplary different data structures, where in for each data structure an individual range-Doppler-map is generated;

Fig. 19    shows a non-fitting target hypothesis. Here a range-Doppler hypothesis of -60° is provided for example;

Fig. 20    shows according to Fig. 19 different phase corrected Doppler signals of different receiving antennas by a hypothesis of -60°;

Fig. 21    shows in contrast to Fig. 19 an exemplary fitting target hypothesis. Here a range-Doppler hypothesis of -22,3404° is provided for example;

Fig. 22    shows according to Fig. 21 different phase corrected Doppler signals of different receiving antennas by a hypothesis of -22,3404°;

Fig. 23    shows an exemplary that starting phases of each receiving process may be coherent and equal. Especially the after the starting phases following phases are equal;

Fig. 24    shows an exemplary range matrix;

Fig. 25    shows for example a number of different range matrices of individual MIMO sequences;

Fig. 26    shows a schematic field of view an antenna. Therefor a hypothesis model $p_H$ may be used to estimate an angle.

Fig. 27    shows an exemplary construction of an aperture hypothesis according to Fig. 25;

Fig. 28    shows an expended hypothesis model;

Fig. 29    shows exemplary an aperture hypothesis based on the expended hypothesis model of Fig. 28;

Fig. 30    shows an exemplary control flow how to estimated angle in azimuth and elevation;

Fig. 31    shows schematic a definition of compressed sensing for angel estimation; and

Fig. 32    shows schematic a process flow how to the Calculation of a direction of arrival may be done.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment may also be supplemented by further features of the invention already described.

In the figures identical reference signs indicate elements that provide the same function.

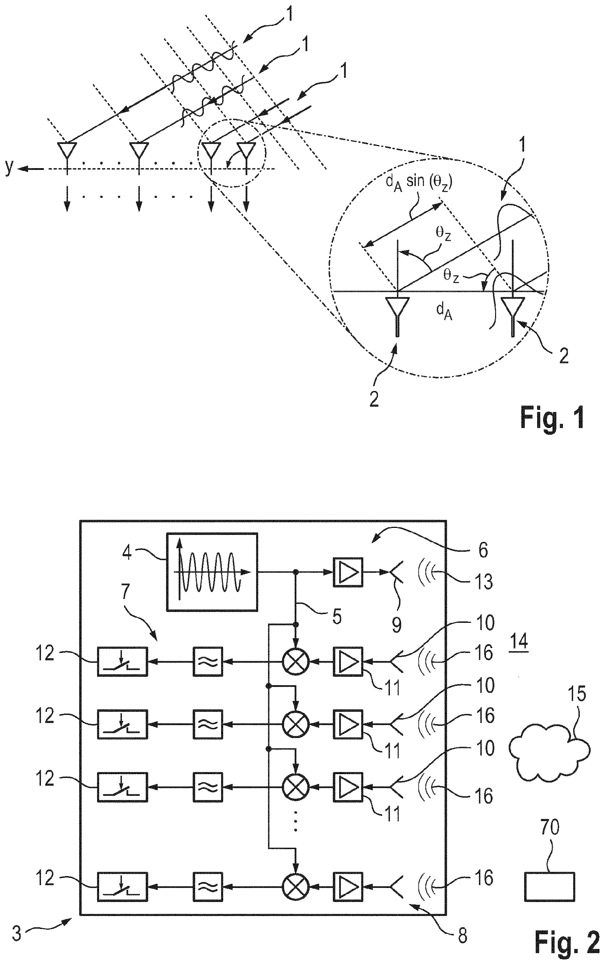

Fig. 1 shows a schematic view of a reception signal 1 of a conventional radar system of the state of the art. This radar system comprises at least one or more uniform linear antennas 2. There may be a spatial antenna distance $d_A$, between two uniform linear antennas 2. There may be an incidence angel $\theta_z$ at each of the uniform linear antennas 2. Especially an angle estimation may be bone based on the above described information. Therefor an angel depended phasor may be calculated with the following equation,

$$s_B(n_c, l_c, m) \approx \exp\left(-j2\pi \frac{d_A}{\lambda} \sin(\theta_z)\, m\right)$$

wherein m shows an antenna index, $n_c$ an constant sample index and $l_c$ a constant chirp index.

Fig. 2 shows a schematic transmitter-receiver structure of a radar system 3. An optical signal 5 may be generate with a waveform generator 4. This optical signal 5 may be send by optical wires to a transmitter 6 and/or to at least one receiver 7.

The radar system may contains an electronic evaluation unit 70 to process information and/or data. The electronic evaluation unit 70 may be formed as an electronic evaluation device or as an electronic evaluation system or as a computing device.

The transmitter 6 and the at least one receiver 7 may be part of an antenna array 8 of the radar system 2. The antenna array 8 may be comprise multiple transmitting antennas 9, which may be arranged on the transmitter 7. The antenna array 8 may be comprise also multiple receiving antennas 10, which may be arranged on the at least one receiver 7. The receiver 7 or all of these receivers may be comprise a low noise amplifier 11 and an inphase channel 12 for signal processing.

For example each transmitting antenna of the multiple transmitting antennas 9 may transmit a radar signal 13 into an environment 14 of the radar system 3 in successive transmission operation. After each transmitting operation, at least some of the plurality of receiving antennas 10 may receive reflected received signals 16 from a radar target 15 in the environment 14 based on the transmitted radar signal 13 of the respective transmitting operation.

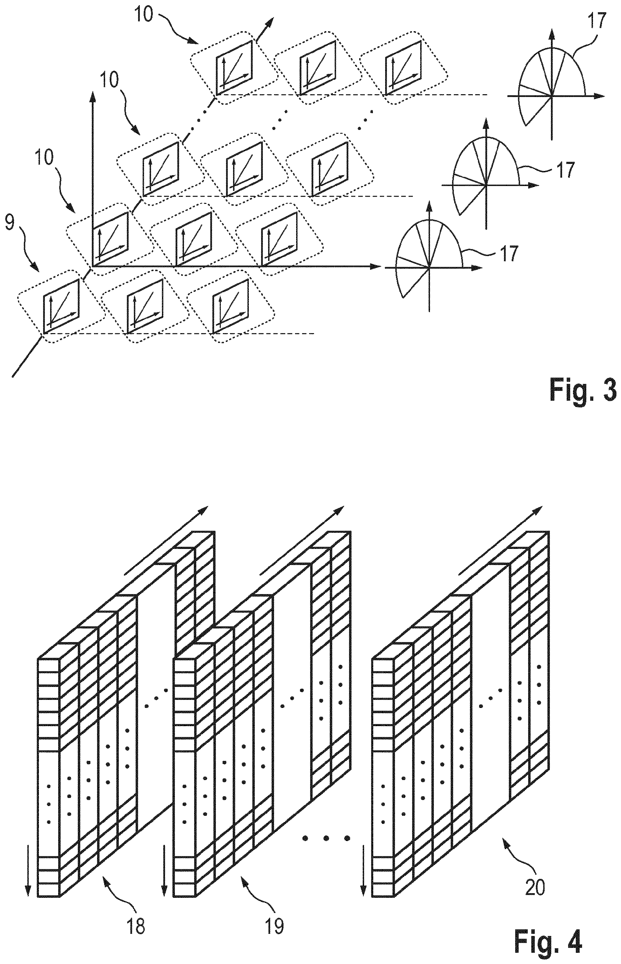

Fig. 3 shows exemplary how to calculate a range Doppler of constantly moving target. This moving target may be moves towards an antenna boresight direction. The calculation may be done in a far field model.

Here may be transmit radar signals 13 in different transmission operations with the transmitting antennas 9. In this example, a constant phase shift with each new transmitted pulse or radar signal 13 is present. After each transmission operation the phase shift 17 is constant.

Fig. 4 shows a exemplary receiving data structure. A linear phase progression for a moving target along a pulse sequence may be done. For each receiving antenna 10 a own data structure 18, 19, 20 may be generate. The advantage of this is that each receiving antenna 10 allows the calculation of its own range-Doppler-matrix. As Example, a constantly moving target in the same range gate shows a coherent linear phase progression between all receiving antennas 10.

Therefor a constant range signal may be calculated with the following equation:

$$S_B(u_c, m, k) = S_B(u_c, k) \times \exp\left(j 2\pi f_D m\, T_{chirp}\right)$$

Particularly a Doppler depended phase may be calculated with the following equation:

$$\varphi\left(S_B(u_c, m, K)\right) = mx \qquad\qquad x = 2\pi f_D T_{chirp}$$

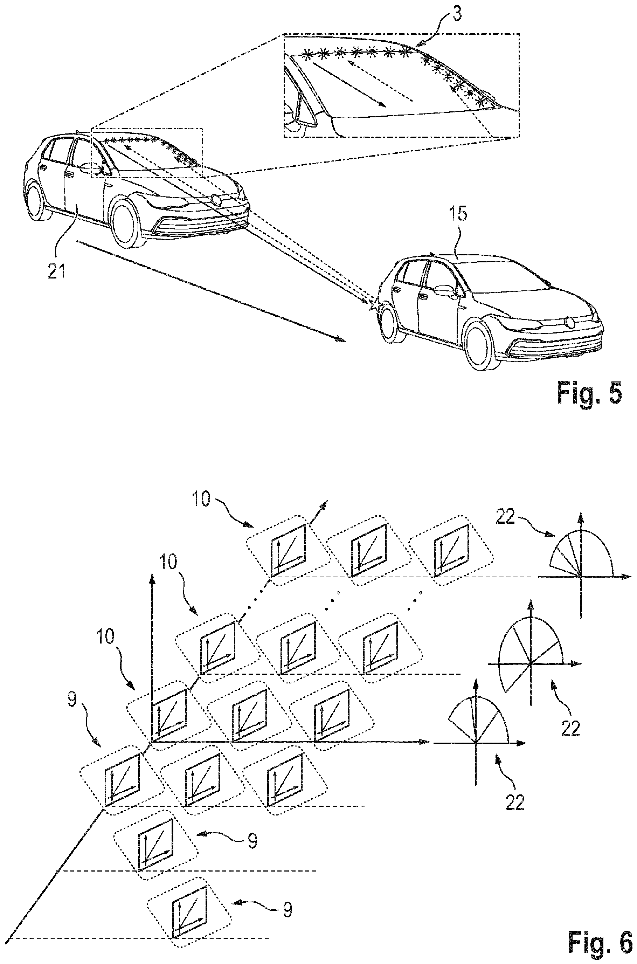

Fig. 5 shows a schematic vehicle 21, which comprise especially the radar system 3. In front of the motor vehicle 21 an other vehicle, like the radar target 15 is moving.

Particularly the transmitted antennas 9 and the receiving antennas 10 of an antenna array may be arranged at a distance from each other on the motor vehicle 21.

Particularly a signal model for a radar antenna in a large array may be calculated with the following equation:

$$s(n, m, k, l) = \sum_{i=0}^{I-1} \underbrace{\exp\left(2\pi j \frac{B}{T_{chirp} c_0}\left(2v_{t,i} T_{RRI} m + d_{t,i}(k,l) n T_s\right)\right)}_{\text{Range Doppler Coupling}} \times \underbrace{\exp\left(\frac{2\pi}{\lambda} j\left(2v_{t,i} T_{RRI} m + d_{t,i}(k,l)\right)\right)}_{\text{Distance and velocity dependend phase term}}$$

Wherein n shows a sample index, m shows a chirp or pulse index, k shows a receiving antenna index and l shows a transmission antenna index. Furthermore shows the parameter i a target index, $d_t(k,l)$ a two way target distance and $T_{RRI}$ a ramp-repetition-interval.

Fig. 6 shows an example of a signal transmission based on a Multiple-Input-Multiple-Output-(MIMO)-method. At this each transmitting antenna of the multiple transmitting antennas 9 transmits a radar signal 13 into the environment 14 of the radar system 3 in successive transmission operation. After each transmitting operation, at least some of the plurality of receiving antennas 10 receive reflected received signals 16 from the radar target 15 in the environment 14 based on the transmitted radar signal 13 of the respective transmitting operation.

Especially for each transmission operation the one of the plurality of the transmitting antennas 9 which transmits a radar signal 13 may be defined in any order, in particular the one of the plurality of the transmitting antennas 9 which transmits a radar signal 13 in each transmission operation is randomized default. The received signals 16 which may be received after each transmission operation may be mixed with the radar signal 13 of the transmitting antenna 9 of the individual transmission operation.

It is assumed here that a target is constantly moving. This moving target may be moves towards an antenna boresight direction. The calculation may be done in a far field model. The pulse sequence may be radiated from different transmitting antennas.

However, this is where the problem lies, that spatial distance of varying transmitters causes different distance dependent phase shifts 22. The consequence of this is that a coherent integration of individual range-Doppler-matrices is not possible.

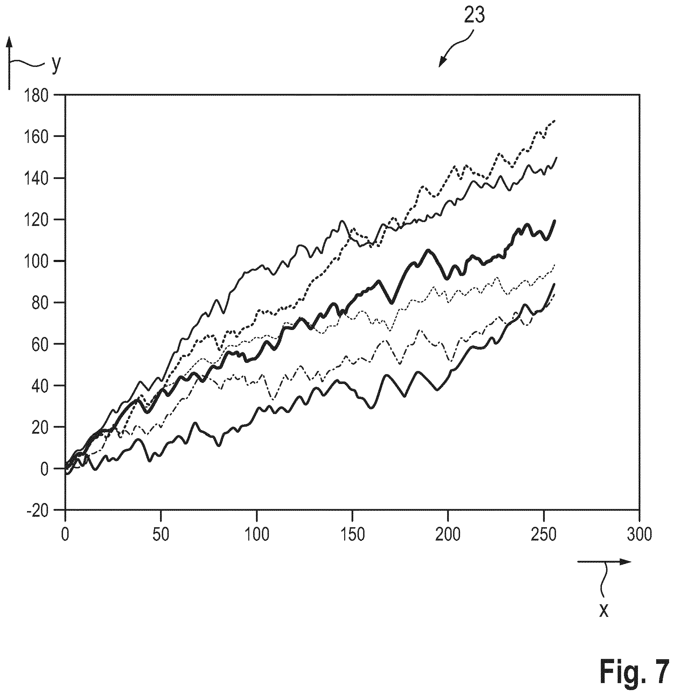

Fig. 7 shows exemplary a phase propagation along the chirp sequences 23 for all or a defined number of receiving antennas 10. The x axis shows a sample index in n and the y axis shows a phase in rad. It would be advantageous here to change phase term due to varying transmitting and/or receiving antenna paths. Therefor the proposed invention may be provided.

Due to the sparse, non-uniform and large geometry of the antenna array, conventional signal processing algorithms fail to compensate phase shifts and do not result in an unambiguous angular measurement. Therefore, novel approaches are needed. This is where the present invention is advantageously used.

Maybe a two-step approach may be done. First a sensing matrix for direction of arrival may be estimate. This is useful for a Doppler calculation. And second a Doppler compensation of identified target may be done.

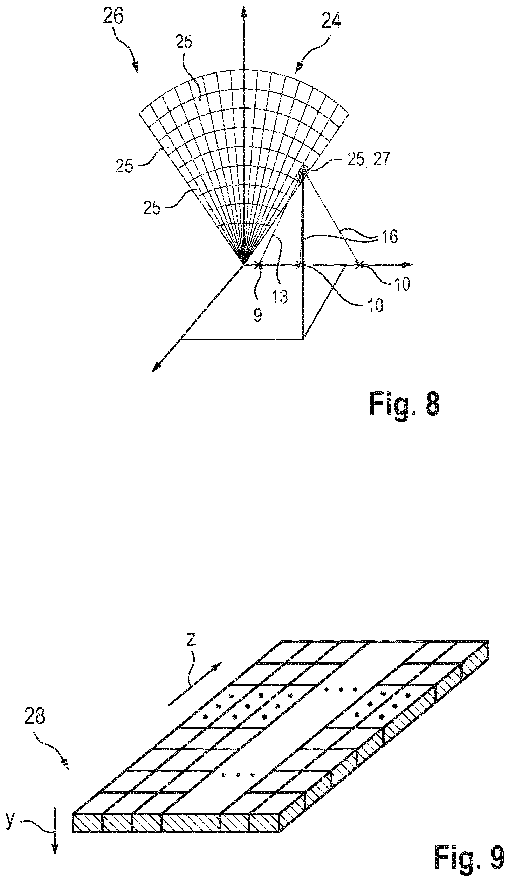

Fig. 8 shows for example a field of view 24 of one of the transmitting antennas 9. Maybe each transmitting antenna 9 has an individual field of view.

An Antenna may be able to detect object's which are within the field of view of this antenna.

For example multiple pseudo targets 25 may be determined based of the respective field of view 24. According to this a hypothesis model 26 may be estimated, which may be use to estimate an angle in azimuth and elevation of radar targets.

Therefor a hypothesis model $p_H$ may be provided for one pseudo target 27 of the multiple pseudo targets 25.

The hypothesis model $p_H$ may be calculated as following:

$$\vec{p}_H = r_H \begin{pmatrix} \cos\theta_H \\ \sin\theta_H \\ 0 \end{pmatrix}$$

Here $r_H$ may be constant and $\theta_H$ may be -60°.

Fig. 9 shows according to Fig. 8 exemplary a data structure 28 or a hypothesis data structure.

On the z axis is applied the pulses in correlation of transmitting antennas. On the y axis is applied the range gates.

For each hypothesis of a target angle the data structure 28 may be generated based on the received signals 16, wherein the data structure 28 comprised the received signals 16 which correspond to the hypothesis of the target angle of this respective data structure 28.

The exemplary data structure 28 may be here provided for a direction of arrival of 0°.

For the pseudo target 27 may be determined a range bin based on the radar signal 13 of the respective transmitting antenna 9 and on at least the received signal 16 which correspond to the radar signal 13.

With the following equation the range bin, also called as pseudo target two way path distance, may be calculated.

$$d(k,l) = \left\| \vec{p}_{T_{x,k}} - \vec{p}_H \right\|_2 + \left\| \vec{p}_{R_{x,l}} - \vec{p}_H \right\|_2$$

Furthermore a direction of arrival hypothesis may be estimate with the following equation:

$$s(k,l) = \exp\left( -\frac{2\pi}{\lambda} jd(k,l) \right)$$

Furthermore one or more hypothesis of the directions of arrival of the radar target, in particular the pseudo target 27, may be determined on the basis of the range bin of the pseudo target 27, wherein the multiple hypothesis of target angels are specified based on the hypothesis of the directions of arrival.

Especially multiple hypothesis of target angles with regards to the radar target may be specified.

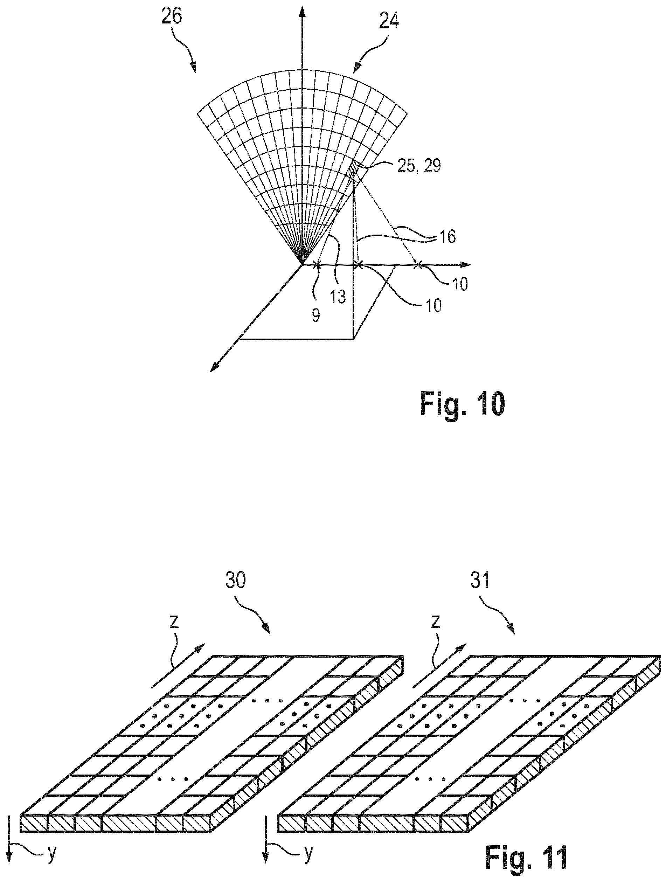

In Fig. 10 shows for example according to Fig. 8 the field of view 24, but here is another pseudo target 29 considered. The comments on Fig. 8 apply analogously here.

In Fig. 11 are according to Fig. 9 two data structures 30, 31 shown. The data structure 30 may be here provided for a direction of arrival of 0°. The data structure 31 may be here provided for a direction of arrival of 1°. The comments on Fig. 9 apply analogously here.

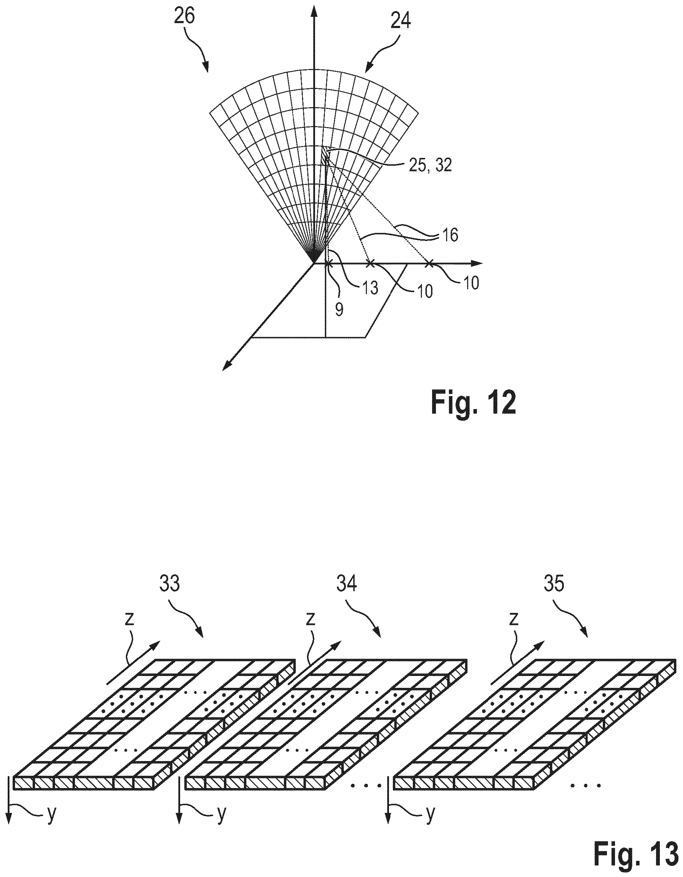

Fig. 12 shows another exemplary pseudo target 32 within the field of view 24. Based on this pseudo target 32 for different directions of arrival different data structures 33, 34, 35 (see Fig. 13) may be determined. The data structure 33 may be here provided for a direction of arrival of 0°. The data structure 34 may be provided for a direction of arrival of 1°. The data structure 34 may be here provided for a direction of arrival of 15°. Particularly for any directions of arrival an individually data structure may be provided. The comments on Fig. 9 apply analogously here.

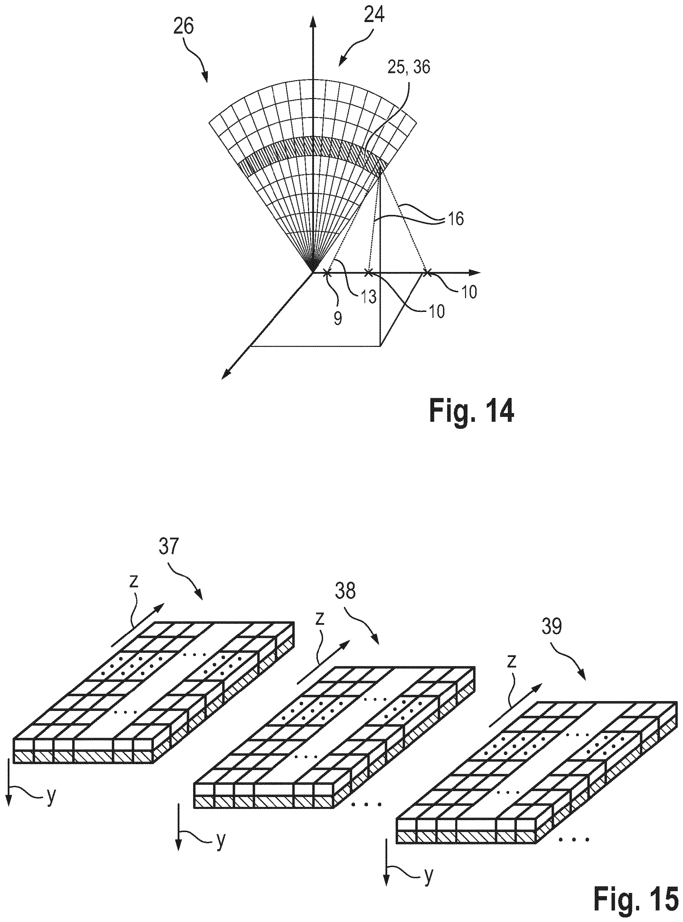

Fig. 14 shows another exemplary pseudo target 36 within the field of view 24. Here the pseudo target 36 may be a wider expansion. Based on this pseudo target 36 for different directions of arrival different data structures 37, 38, 39 (see Fig. 15) may be determined. The data structure 37 may be here provided for a direction of arrival of 0°. The data structure 38 may be provided for a direction of arrival of 1°. The data structure 39 may be here provided for a direction of arrival of 15°. The data structures 37, 38, 39 here have more levels in y axis as at the previous figures. Particularly for any directions of arrival an individually data structure may be provided. The comments on Fig. 9 apply analogously here.

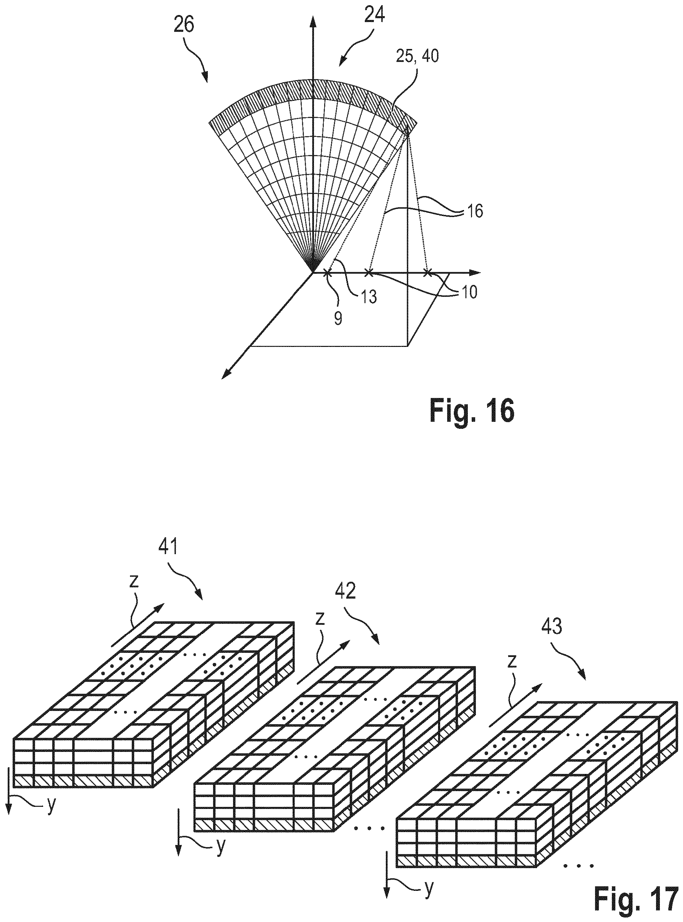

Fig. 16 shows another exemplary pseudo target 40 within the field of view 24. Here the pseudo target 40 may be a wider expansion. Based on this pseudo target 40 for different directions of arrival different data structures 41, 42, 43 (see Fig. 17) may be determined. The data structure 41 may be here provided for a direction of arrival of 0°. The data structure 42 may be provided for a direction of arrival of 1°. The data structure 43 may be here provided for a direction of arrival of 15°. The data structures 41, 42, 43 here have different levels in y axis. This means that for different range gate or range bins data be collected. Particularly for any directions of arrival an individually data structure may be provided. The comments on Fig. 9 apply analogously here.

As shown is the previous figures for example that for each hypothesis of a target angle, in particular a direction of arrival, a data structure may be generated based on the received signals 16, wherein each data structure comprised the received signals 16 which correspond to the hypothesis of the target of the respective data structure.

With the help of the data structure, targets may be determined for the assumption that the target is located in the respective direction of arrival.

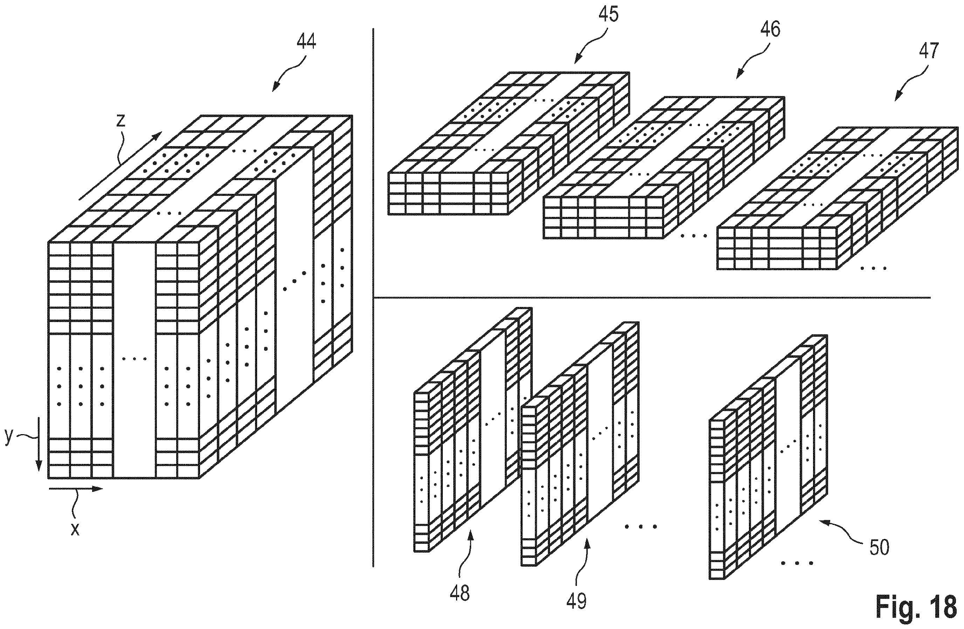

Fig. 18 shows for example a range matrix 44.

Here is on the x axis of the range matrix 44 the receiving antenna index applied. On the y axis of the range matrix 44 the sample index is applied. And on the z axis of the range matrix 44 the pulse per transmitting antenna is applied.

Furthermore are here exemplary shown different data structure 45, 46, 47 which may be provided as in the previous figures.

For each generated data structure 45, 46, 47 an individual range-Doppler-map 48, 49, 50 is generated based on the individual received signals 16 and/or the individual direction of arrival of each data structure 45, 46, 47. A target information of the radar target 15 may be determined based on the range-Doppler-maps 48, 49, 50 of the date structures 45, 46, 47.

Hereby may select those date of a date structure 45, 46, 47, which show a maximum respect to the individual direction of arrival.

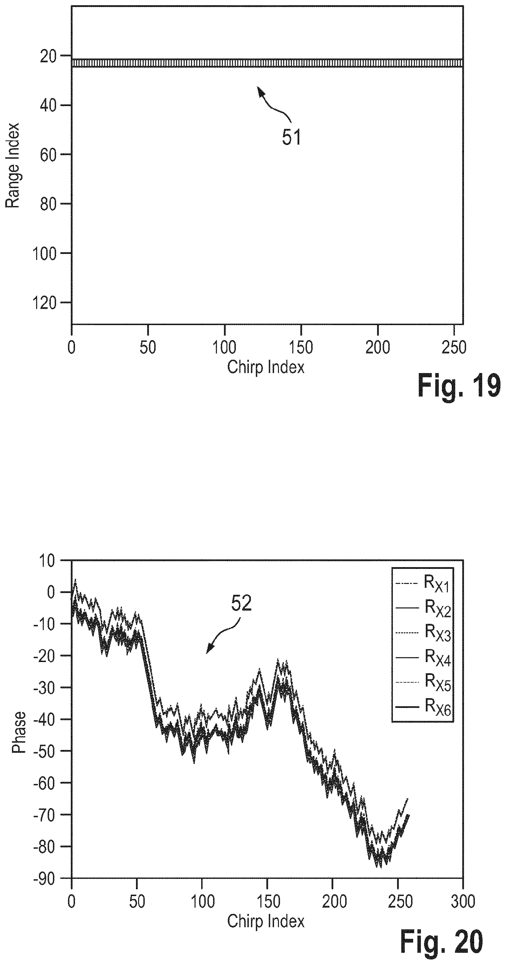

Fig. 19 shows a non-fitting target hypothesis. Here a range-Doppler hypothesis 51 of -60° is provided for example. According to these shows Fig. 20 different phase corrected Doppler signals 52 of different receiving antennas by a hypothesis of -60°.

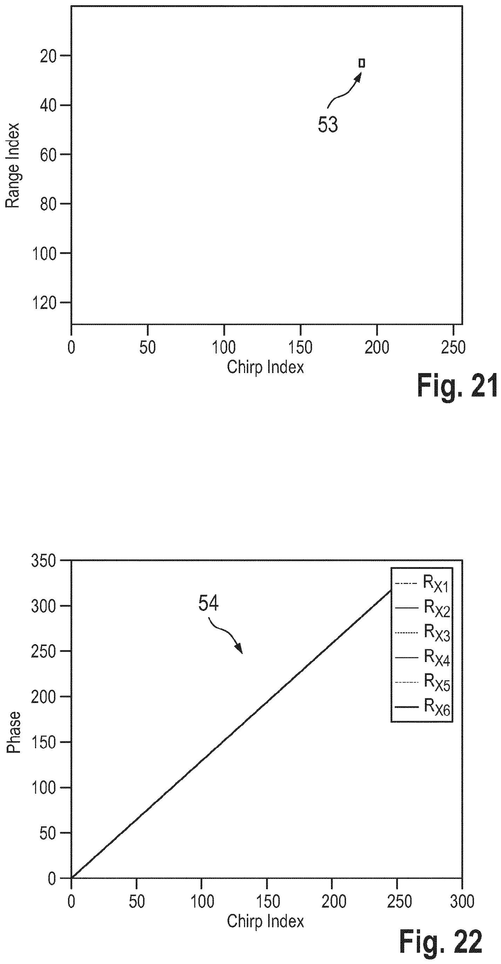

Fig. 21 shows in contrast to Fig. 19 a fitting target hypothesis. Here a range-Doppler hypothesis 53 of -22,3404° is provided for example. According to these shows Fig. 22 different phase corrected Doppler signals 54 of different receiving antennas by a hypothesis of -22,3404°. This may be achieved by the above invention.

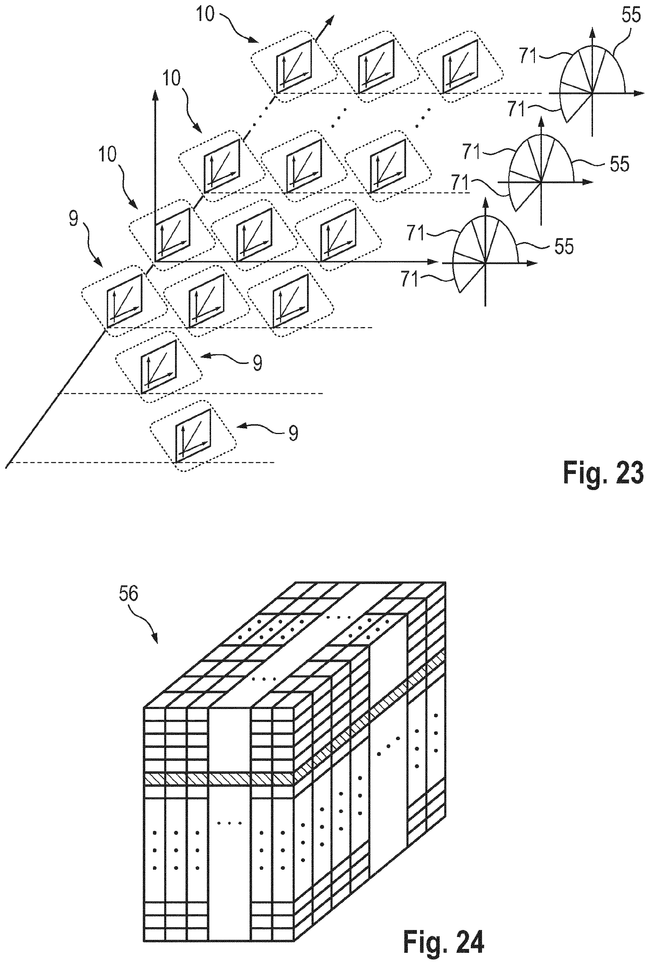

Fig. 23 shows an exemplary result of the previous embodiments. The starting phases 55 of each receiving process may be coherent and so equal. Especially the after the starting phases 55 following phases are equal. This means that a coherent signal processing may be done.

In particular a range-Doppler-spectrum with the preceding signal processing contains a signal-to-noise ratio, which could be signifimaytly improved.

In the following Figures a brief description how to estimate an angular is shown.

Fig. 24 shows an exemplary range matrix 56, which may be a data structure 45, 46, 47. Based on the range matrix 56 may be estimate a target signal of a radar target. Particularly this target signal may be calculated with the following equation:

$$S(u_c, m, k, l) = S(u_c) \underbrace{\exp\left(\frac{2\pi}{\lambda} j 2 v_t T_{RRI} m\right)}_{\text{Doppler dependent phase}}$$

$$\underbrace{\exp\left(\frac{2\pi}{\lambda} j d_t(k, l)\right)}_{\text{DoA dependent phase}}$$

This equation contains a Doppler dependent phase and a direction of arrival (DoA) dependent phase.

In signal processing, direction of arrival denotes the direction from which usually a propagating wave arrives at a point, where usually a set of sensors are located.

Particularly for each range-Doppler-map or the range matrix 56 a Doppler compensation may be applied based on a Doppler compensation filter which is based on individual target signal. Particularly this filter may be describe with the following equation:

$$S_{DP}(m, o) = \exp\left(-\frac{2\pi}{\lambda} j \, 2 v_t(o) T_{RRI} m\right)$$

The relationship chirp index Doppler velocity may be calculated with the following equation:

$$v_t(o) = \frac{c_0}{2f_0} \frac{o}{LT_{RRI}}$$

Based on the Doppler compensation filter a Doppler compensation of the target signal may be done. This may be describe with the following equation:

$$S(k, l) = S(u_c, m, k, l)\, S_{DP}(m, o)$$

Finally a aperture snapshot may be calculated with the following equation:

$$S(k, l) = S(u_c) \exp\left(\frac{2\pi}{\lambda} j d_t(k, l)\right)$$

With an optionally derivation of the aperture snapshot may be estimate an angular.

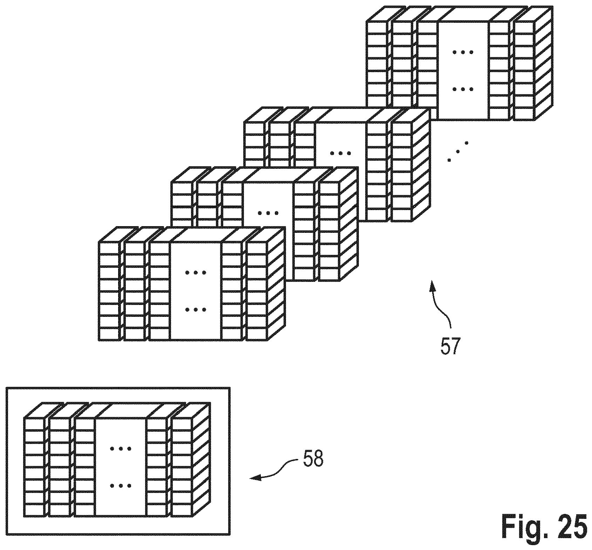

Fig. 25 shows for example a number of different range matrices 57 of individual MIMO sequences.

Here a redistribution of the range gate with the expected target angle may be put into a target data structure according to the array manifest of virtual antenna elements. Maybe a transfer of the identified range gates from each chirp and/or into each transmitter-receiver combination.

A rang Doppler matrix 58 may be estimate based on the aperture snapshot adjusted by Doppler phase term.

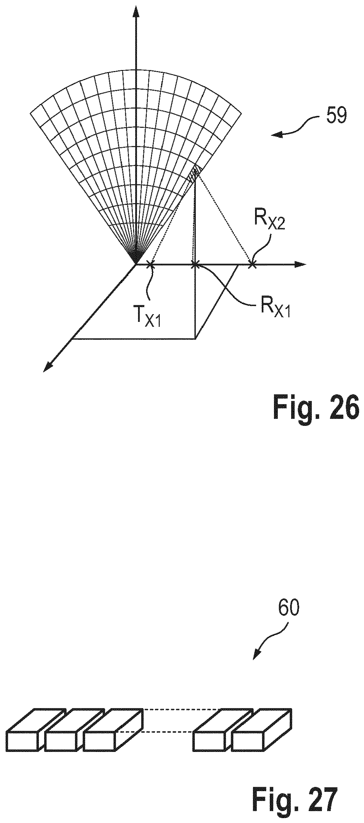

Fig. 26 shows a schematic field of view 59 of an antenna. Therefor a hypothesis model $p_H$ may be used to estimate an angle.

The hypothesis model $p_H$ may be calculated as following:

$$\vec{p}_H = r_H \begin{pmatrix} \cos\theta_H \\ \sin\theta_H \\ 0 \end{pmatrix}$$

Here $r_H$ may be constant and $\theta_H$ may be -60°

A construction of an aperture hypothesis 60 is shown in Fig. 27. With this aperture hypothesis 60 a description of an spatial signal as a function of range and angle of incidence may be done.

With the following equation a pseudo target two way path distance may be calculated.

$$d(k, l) = \left\|\vec{p}_{T_{x,k}} - \vec{p}_H\right\|_2 + \left\|\vec{p}_{R_{x,l}} - \vec{p}_H\right\|_2$$

Furthermore a direction of arrival hypothesis may be estimate with the following equation:

$$s(k, l) = \exp\left(-\frac{2\pi}{\lambda} j d(k, l)\right)$$

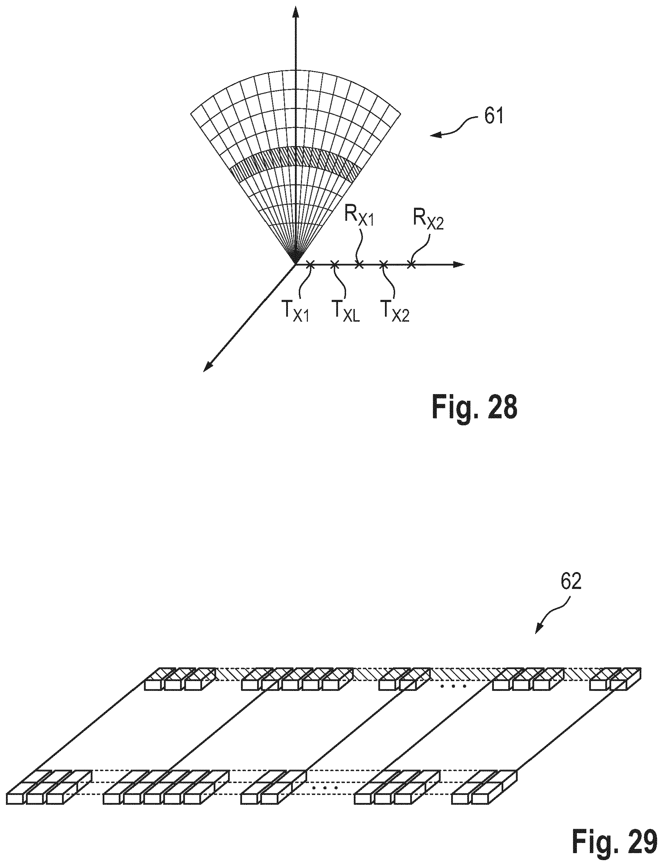

In Fig. 28 is expended hypothesis model 61 shown. The description of Fig. 26 are to be applied here in any case.

In Fig. 29 a aperture hypothesis 62 based on the expended hypothesis model 61 is shown. The description and the calculations of Fig. 27 are to be applied here in any case.

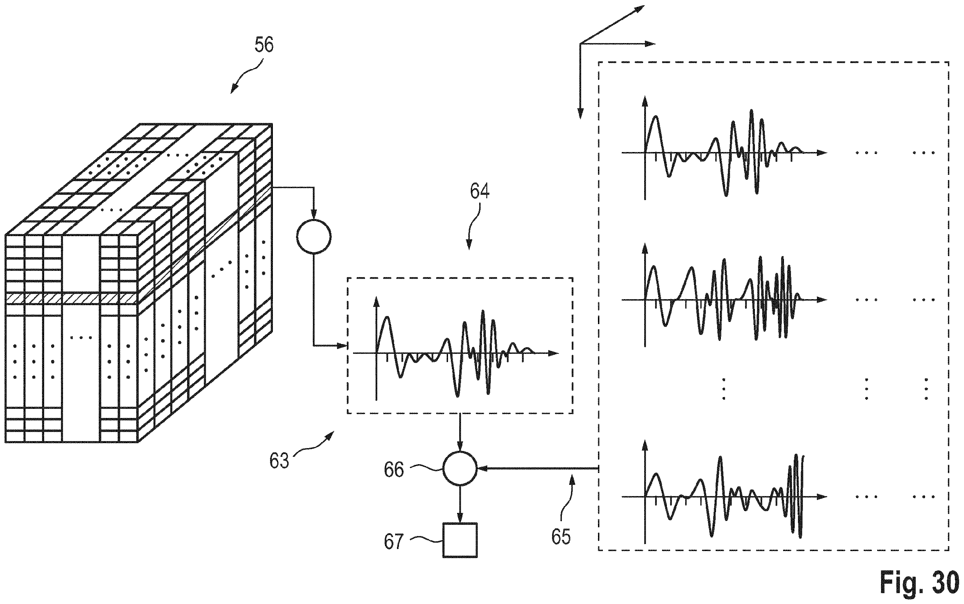

Fig. 30 shows an exemplary control flow how to estimated angle in azimuth and elevation.

As a first input parameter 63 a Doppler compensation of the range matrix 56 may be provided. As a second input parameter 64 the Doppler adjusted aperture signal may be provided. As an exemplary third input parameter 65 an aperture hypothesis may be provided. Based on the input parameters 63, 64, 65 an angle in azimuth and elevation may be estimate with an orthogonal matching pursuit algorithm 66. The angle in azimuth and elevation may be provided as a target information 67 of the radar target 15. This target information 67 may be determined based on the orthogonal matching pursuit algorithm 66 or a compressive sensing algorithm. Particularly may be provided with the target information 67 an angle and/or a direction to the radar target 15.

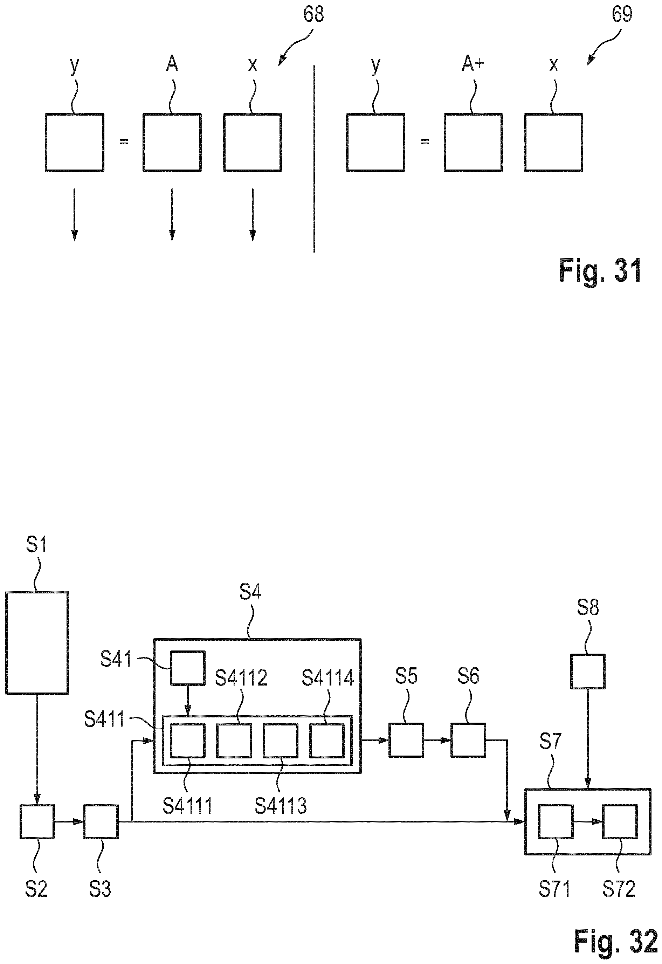

Fig. 31 shows schematic a definition of compressed sensing for angel estimation.

Compressed sensing is based on the principle that, through optimization, the sparsity of a signal may be exploited to recover it from far fewer samples than required by the Nyquist-shannon-sampling-theorem.

Assume a signal is modelled by an underdetermined linear system. Therefore a compressed sensing schema 68 is shown. A original signal X is combined with a sensing matrix A to estimate a compressed signal Y. With a reconstruction schema 69 the original signal X may be reconstructed. For X maybe exists an infinite number of solution. To find a solution one must impose extra contraints and conditions. In Compressed sensing one adds the contraint of sparsity. Here only solutions which have a small number of nonzero coefficients may be allow.

Fig. 32 shows schematic a process flow how to the Calculation of a direction of arrival may be done.

In an optionally step S1 an input may be calculated based on a two way target distance. For example the input based on 256 ADC-samples multiple with six receiving antennas multiple with eight transmitting antennas multiple with 32 MIMO-cycles.

In an optionally step S2 a Hamm windowing range may be calculated. This may takes 62 microseconds.

In an optionally step S3 a range fast Fourier transformation (FFT) may be performed. This may takes 400 microseconds.

In an optionally step S4 an coherent Doppler processing may be performed. The step S4 may be contains a step S41, in which a according to a sensing matrix a direction of arrival compensation may be performed. This may takes 16,2 microseconds.

The step S4 may be contains also a step S411 which is performed after S41. In S411 range-Doppler DoA compensation may be performed. The step S411 may be contains a step S4111, in which a Hamm windowing Doppler may be performed. This may takes 64 microseconds. The step S411 may be contains a step S4112, in which a DoA compensation may be performed. This may takes 8,5 microseconds. The step S411 may be contains a step S4113, in which a Doppler FFT may be performed. This may takes 1,5 microseconds. The step S411 may be contains a step S4114, in which a Doppler compression may be performed. This may takes 4,6 microseconds.

In an optionally step S5 a CFAR computing may be performed.

In an optionally step S6 a peak detection may be performed.

In an optionally step S7 an direction of arrival (DoA) estimation may be performed. The step S7 may be contains a step S71, in which a Doppler compensation may be performed. The step S71 may takes 9 microseconds. The step S7 further may be contains a step S72, in which a OMP computation may be performed.

Step S1 to step S72 may be done or calculate online.

In an optionally step S8 a sensing matrix aperture hypothesis may be performed. This may take 251 microseconds and this may be provided for step S7.

Step S8 may be done offline.

The inventive method comprises in other words:

    i. Compensation of path mismatch due to paralaxis induced phase shift
    ii. Coherent integration of individual receive antenna signals for the determination of the Doppler frequencies
    iii. Indication for target identification in each range-Doppler cell
    iv. Local aperture signal (snapshot) indexed by range Doppler cell
    v. Doppler compensation of local aperture signal as input for orthogonal matching pursuit algorithm (or other compressive sensing algorithms)
    vi. Calculation of angular target information

**List of reference characters**

| 1 | reception signal |
|---|---|
| 2 | uniform linear antennas |
| 3 | radar system |
| 4 | waveform generator |
| 5 | optical signal |
| 6 | transmitter |
| 7 | receiver |
| 8 | antenna array |
| 9 | transmitting antennas |
| 10 | receiving antennas |
| 11 | low noise amplifier |
| 12 | inphase channel |
| 13 | radar signal |
| 14 | environment |

| 15 | radar target |
|----|--------------|
| 16 | received signals |
| 17 | phase shift |
| 18 | data structure |
| 19 | data structure |
| 20 | data structure |
| 21 | motor vehicle |
| 22 | phase shifts |
| 23 | chirp sequence |
| 24 | field of view |
| 25 | multiple pseudo targets |
| 26 | hypothesis model |
| 27 | pseudo target |
| 28 | data structure |
| 29 | pseudo target |
| 30 | data structure |
| 31 | data structures |
| 32 | pseudo target |
| 33 | data structure |
| 34 | data structure |
| 35 | data structure |
| 36 | pseudo target |
| 37 | data structure |
| 38 | data structure |
| 39 | data structure |
| 40 | pseudo target |
| 41 | data structure |
| 42 | data structure |
| 43 | data structure |
| 44 | range matrix |
| 45 | data structure |
| 46 | data structure |
| 47 | data structure |
| 48 | range-Doppler-map |
| 49 | range-Doppler-map |
| 50 | range-Doppler-map |
| 51 | range-Doppler hypothesis |
| 52 | phase corrected Doppler signals |
| 53 | range-Doppler hypothesis |
| 54 | phase corrected Doppler signals |
| 55 | starting phases |
| 56 | range matrix |
| 57 | different range matrices |
| 58 | range Doppler matrix |
| 59 | field of view |
| 60 | aperture hypothesis |
| 61 | expended hypothesis model |
| 62 | aperture hypothesis |
| 63 | input parameter |
| 64 | input parameter |
| 65 | input parameter |
| 66 | orthogonal matching pursuit algorithm |
| 67 | target information |
| 68 | compressed sensing schema |
| 69 | reconstruction schema |
| 70 | electronic evaluation unit |
| 71 | following phases |
| S1 - S8 | steps |

$T_{x1}$ to $T_{x8}$    antenna index

**Claims**

1.  A method for determining at least one target information (67) of at least one radar target (15) of a radar system (3), wherein the radar system (3) comprising at least one antenna array (8), which comprising multiple transmitting antennas (9) and multiple receiving antennas (10),
    **characterized in that**

    - each transmitting antenna of the multiple transmitting antennas (9) transmits a radar signal (13) into an environment (14) of the radar system (3) in successive transmission operation,
    - after each transmitting operation, at least some of the plurality of receiving antennas (10) receive reflected received signals (16) from the radar target (15) in the environment (14) based on the transmitted radar signal (13) of the respective transmitting operation,
    - multiple hypothesis of target angles with regards to the radar target (15) are specified,
    - for each hypothesis of a target angle a data structure (28, 30, 31, 33, 34, 35, 37, 38, 39, 41, 42, 43, 45, 46, 47) is generated based on the received signals (16), wherein each data structure (28, 30, 31, 33, 34, 35, 37, 38, 39, 41, 42, 43, 45, 46, 47) comprised the received signals (16) which correspond to the hypothesis of the target angle of the respective data structure (28, 30, 31, 33, 34, 35, 37, 38, 39, 41, 42, 43, 45, 46, 47),
    - for each generated data structure (28, 30, 31, 33, 34, 35, 37, 38, 39, 41, 42, 43, 45, 46, 47) an individual range-Doppler-map (48, 49, 50) is generated based on the individual received signals (16) of each data structure (28, 30, 31, 33, 34, 35, 37, 38, 39, 41, 42, 43, 45, 46, 47), and
    - the target information (67) of the radar target (15) is determined based on the range-Doppler-maps (48, 49, 50) of the date structures (28, 30, 31, 33, 34, 35, 37, 38, 39, 41, 42, 43, 45, 46, 47).

2.  The method according to claim 1,
    **characterized in that**
    for each transmission operation the one of the plurality of the transmitting antennas (9) which transmits a radar signal (13) is defined in any order, in particular the one of the plurality of the transmitting antennas (9) which transmits a radar signal (13) in each transmission operation is randomized default.

3.  The Method according to claim 1 or 2,
    **characterized in that**
    multiple pseudo targets (25) are determined based of a respective field of view (24) of each transmitting antenna (9).

4.  The method according to claim 3,
    **characterized in that**
    for each pseudo target (27, 29, 32, 36, 40) a range bin is determined based on the radar signal (13) of the respective transmitting antenna (9) and on ae received signal (16) which correspond to the radar signal (13).

5.  The method according to claim 4,
    **characterized in that**
    hypothesis of the directions of arrival of the radar target (15) are determined on the basis of the range bin of the pseudo targets (27, 29, 32, 36, 40), wherein the multiple hypothesis of target angels are specified based on the hypothesis of the directions of arrival.

6.  The method according to any one of the claim 3 to 5,
    **characterized in that**
    a construction of an aperture hypothesis for each pseudo target (27, 29, 32, 36, 40) is applied based on the respective pseudo target (27, 29, 32, 36, 40).

7.  The method according to any one of the preceding claims,
    **characterized in that**
    a target detection of the radar target (15) is applied based on a range-Doppler-map (48, 49, 50) of each data structure (28, 30, 31, 33, 34, 35, 37, 38, 39, 41, 42, 43, 45, 46, 47).

8.  The method according to any one of the preceding claims,
    **characterized in that**

the received signals (16) of each data structure (28, 30, 31, 33, 34, 35, 37, 38, 39, 41, 42, 43, 45, 46, 47) are coherent combined for determining the range-Doppler-map (48, 49, 50) of each data structure (28, 30, 31, 33, 34, 35, 37, 38, 39, 41, 42, 43, 45, 46, 47).

9. The method according to any one of the preceding claims,
   **characterized in that**
   for each range-Doppler-map (48, 49, 50) of the data structures (28, 30, 31, 33, 34, 35, 37, 38, 39, 41, 42, 43, 45, 46, 47) an individual target signal relating to the radar target (15) is generated based on each range-Doppler-map.

10. The method according to claim 9,
    **characterized in that**
    for each range-Doppler-map (48, 49, 50) a Doppler compensation is applied based on a Doppler compensation filter which is based on individual target signal.

11. The method according to any one of the preceding claims,
    **characterized in that**
    the target information of the radar target is determined based on an orthogonal matching pursuit algorithm (66) or a compressive sensing algorithm.

12. The method according to any one of the preceding claims,
    **characterized in that**
    with the target information (67) an angle and/or a direction to the radar target (15) is provided.

13. Radar system (3) comprising at least one antenna array (8), which comprised multiple transmitting antennas (9) and multiple receiving antennas (10), and an electronic evaluation unit (70), wherein the radar system (3) is designed to carry out a method according to one of the preceding claims.

14. Motor vehicle (21) comprising a radar system (3) according to claim 13.

15. Motor vehicle (21) according to claim 14, wherein
    the transmitted antennas (9) and the receiving antennas (10) of the antenna array (8) are arranged at a distance from each other on the motor vehicle (21).

Fig. 1

Fig. 2

Fig. 3

Fig. 4

Fig. 5

Fig. 6

Fig. 7

Fig. 8

Fig. 9

**Fig. 10**

**Fig. 11**

Fig. 12

Fig. 13

**Fig. 14**

**Fig. 15**

Fig. 16

Fig. 17

Fig. 18

Fig. 19

Fig. 20

Fig. 21

Fig. 22

**Fig. 23**

**Fig. 24**

Fig. 25

EP 4 624 991 A1

**Fig. 26**

**Fig. 27**

29

Fig. 28

Fig. 29

Fig. 30

65

64

66

67

63

56

68                                    69

y        A        x        y        A+       x

[ ] = [ ] [ ]        [ ] = [ ] [ ]

↓        ↓        ↓

**Fig. 31**

S1

S4

S41        S4112    S4114    S5    S6        S8

S411

S4111    S4113        S7

S2    S3        S71    S72

**Fig. 32**

Europäisches Patentamt
European Patent Office
Office européen des brevets

# EUROPEAN SEARCH REPORT

**Application Number**

EP 24 16 6882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/103608 A1 (TEXAS INSTRUMENTS INC [US]) 19 May 2022 (2022-05-19) | 1,8, 12-14 | INV. G01S13/42 |
| Y | * figures 2,4,5 * * paragraph [0025] - paragraph [0027] * * paragraph [0035] - paragraph [0036] * * paragraph [0040] - paragraph [0041] * * paragraph [0050] * * paragraph [0053] * | 2-7, 9-11,15 | G01S13/58 G01S13/72 G01S13/931 |
| Y | US 2022/221570 A1 (ZHU JINTAI [CN] ET AL) 14 July 2022 (2022-07-14) * figure 11 * * paragraph [0104] - paragraph [0109] * * paragraph [0170] * | 2-7, 9-11,15 | |
| A | EP 4 050 365 A1 (NXP USA INC [US]) 31 August 2022 (2022-08-31) * paragraph [0006] * * paragraph [0013] - paragraph [0017] * * paragraph [0035] - paragraph [0040] * | 1-15 | |
| A | DE 10 2023 110301 A1 (GM GLOBAL TECH OPERATIONS LLC [US]) 21 March 2024 (2024-03-21) * paragraph [0017] * * paragraph [0034] - paragraph [0039] * | 1-15 | **TECHNICAL FIELDS SEARCHED (IPC)** G01S |

The present search report has been drawn up for all claims

| Place of search | Date of completion of the search | Examiner |
|---|---|---|
| Munich | 5 September 2024 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6882

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | Publication date | Patent family member(s) | Publication date |
|---|---|---|---|
| WO 2022103608 A1 | 19-05-2022 | CN 116348786 A<br>US 2022146660 A1<br>US 2023324538 A1<br>WO 2022103608 A1 | 27-06-2023<br>12-05-2022<br>12-10-2023<br>19-05-2022 |
| US 2022221570 A1 | 14-07-2022 | CN 113287036 A<br>US 2022221570 A1<br>WO 2021062750 A1 | 20-08-2021<br>14-07-2022<br>08-04-2021 |
| EP 4050365 A1 | 31-08-2022 | EP 4050365 A1<br>US 2022283286 A1 | 31-08-2022<br>08-09-2022 |
| DE 102023110301 A1 | 21-03-2024 | CN 117724085 A<br>DE 102023110301 A1<br>US 2024094376 A1 | 19-03-2024<br>21-03-2024<br>21-03-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200049810 A1
- US 20140111372 A1
- US 20220099817 A1